# EUROPÄISCHE PATENTSCHRIFT

(11) **EP 2 567 773 B1**
(45) Veröffentlichungstag und Bekanntmachung des Hinweises auf die Patenterteilung: **19.04.2017**
(21) Anmeldenummer: 11180542.0
(22) Anmeldetag: 08.09.2011
(51) Int. Cl.: B23K 26/03, B23K 26/20

(54) **VERFAHREN ZUM ÜBERPRÜFEN DER NAHTQUALITÄT WÄHREND EINES LASERSCHWEISSPROZESSES**
METHOD FOR INSPECTING SEAM QUALITY DURING A LASER WELDING PROCESS
PROCÉDÉ DE VÉRIFICATION DE LA QUALITÉ DE LA COUTURE LORS D'UN PROCESSUS DE SOUDAGE AU LASER

(43) Veröffentlichungstag der Anmeldung: 13.03.2013
(73) Patentinhaber: TRUMPF Werkzeugmaschinen GmbH + Co. KG, 71254 Ditzingen (DE)
(72) Erfinder: Dorsch, Friedhelm, 70499 Stuttgart (DE); Pfitzner, Dieter, 75382 Althengstett (DE); Braun, Holger, 71272 Renningen (DE)
(74) Vertreter: Kohler Schmid Möbus Patentanwälte

(56) Entgegenhaltungen:
- WO-A1-2008/052591
- DE-B3-102007 024 789
- US-A1- 2004 188 397
- US-B1- 6 188 041
- CHEN H B ET AL: "LASER PROCESS MONITORING WITH DUAL WAVELENGHT OPTICAL SENSORS", PROCEEDINGS OF LASER MATERIALS PROCESSING CONFERENCE ICALEO.PROCEEDINGS OF INTERNATIONAL CONGRESS ON THE APPLICATIONS OFLASERS AND ELECTRO-OPTICS, XX, XX, Bd. 1722, 3. November 1991 (1991-11-03), Seiten 113-122, XP000490945,

## Beschreibung

Die vorliegende Erfindung betrifft ein Verfahren zum Überprüfen der Nahtqualität während eines Laserschweißprozesses.

Sind beim Schweißen mit Laserstrahlung keine optimalen Schweißparameter eingestellt, können Schweißfehler auftreten, die zu Nahtunregelmäßigkeiten führen. Dabei kann es sich, um eine ungenügende Durchschweißung, Humping (Unregelmäßigkeiten der Wölbung der Nahtoberraupe), Löcher etc. handeln. Eine Beobachtung des Schweißprozesses ermöglicht es, verschiedene Schweiß- bzw. Nahtfehler zu erkennen. Eine prozesssichere Erkennung von Fehlern wird jedoch durch Prozessemissionen, wie z. B. Prozessplasma, Wärmestrahlung der Metalldampffackel oder auch durch die Oberflächenbeschaffenheit der Nahtoberraupe gestört.

Die DE 10 2005 024 085 A1 beschreibt eine Vorrichtung zur Überwachung bzw. zur Charakterisierung eines Laserbearbeitungsvorgangs, bei der Strahlung aus einem Wechselwirkungsbereich zwischen einem Laserstrahl und einem Werkstück mit zumindest einem strahlungsempfindlichen Empfänger und zumindest einer Kamera erfasst wird. Deren Ausgangssignale werden zeitgleich einer Auswerteschaltung zugeführt, um den Verlauf des Laserbearbeitungsvorgangs zu charakterisieren. Es wird vorgeschlagen, zeitgleich verschiedene spektrale Bereiche zu erfassen, um die Vorteile der verschiedenen Überwachungen je nach durchzuführendem Überwachungsprozess voll nutzen zu können.

In der DE 10 2009 050 784 A1 ist ein Verfahren zur bildgestützten Kontrolle von Bearbeitungsprozessen unter Einsatz von ortsauflösenden Detektoren und mindestens einer Beleuchtungsquelle zur Beleuchtung der Wirkzone des Bearbeitungsstrahls bekannt geworden. Einander zugehörige Bilder mit deutlich unterschiedlichen Prozessmerkmalen werden dadurch erzeugt, dass der Detektor nacheinander mit Bildern unterschiedlicher Lichtverhältnisse bestrahlt wird und diese gemeinsam zur Beurteilung von Prozessmerkmalen ausgewertet werden.

In der WO 2008/05291 A1 werden ein Verfahren und eine Vorrichtung zur Überwachung eines Bearbeitungsbereichs eines Werkstücks beschrieben, bei denen die von dem Bearbeitungsbereich emittierte Strahlung für jedes auf ein Detektorsystem abgebildete Flächenelement des Bearbeitungsbereichs gleichzeitig bei zumindest zwei Wellenlängen erfasst wird. Für jedes erfasste Flächenelement werden eine Temperatur und/oder ein Emissionskoeffizient ermittelt, um eine Qualitätsbewertung der Bearbeitung vorzunehmen.

In der EP 1 415 755 B1 ist ein Überwachungsverfahren zum Überwachen einer Schweißqualität eines gepulsten Lasers bekannt geworden, bei dem mehrere Testschweißungen durchgeführt werden und bei jeder Testschweißung mindestens eine Schweißkenngröße erfasst wird, weiche mehrere Attribute aufweist. Für jede Testschweißung wird eine Schweißqualität z.B. visuell bestimmt. Mittels geeigneter Algorithmen wird eine Einzelwertausgabe für das jeweilige Attribut erzeugt und mit den Schweißqualitäten der Testschweißungen Korreliert, um ein die Schweißqualität anzeigendes Attribut auszuwählen.

In der US 5,580,471 werden eine Vorrichtung und ein Verfahren beschrieben, bei denen eine Kamera und ein Wärmebild-Erfassungssystem verwendet werden, um ein optisches und ein thermisches Bild eine Materials während und nach einer thermischen Bearbeitung aufzunehmen. Anhand der Bilder werden Steuersignale zur Steuerung der Intensität und des Timings von Bearbeitungsstrahlen sowie zur Steuerung eines Scanners zum Umlenken der mit Hilfe von optischen Fasern kombinierten Bearbeitungsstrahlen erzeugt.

Die US 7,107,118 B2 beschreibt ein Steuerungssystem für einen Laserschweißprozess, welches Attribute für die Qualität der Schweißnaht und der Schweißung festlegt, um diese in ein Überwachungs- und Regelsystem zu integrieren. Zusätzlich zur Prozesssteuerung werden Attribute für die Schweißqualität extrahiert und eine unmittelbare Dokumentation der Schweißqualität bereitgestellt. Hierbei können mehrere Subsysteme zur Echtzeit-Überwachung der Schweißqualität vorgesehen sein, die miteinander sowie mit Subsystemen zur Steuerung des Schweißprozesses mittels eines zentralen Prozessors kommunizieren.

Die DE 102 25 450 A1 beschreibt ein Verfahren zur Detektion von Fehlern bei Laserbearbeitungsprozessen, bei dem während der Bearbeitung Prozesseigenschaften mittels einer Kamera erfasst werden. Mit Hilfe dieser Kamera wird die Wärmestrahlung wenigstens eines Teils des bearbeiteten Werkstücks während und/oder nach dem Laserbearbeitungsprozess thermographisch erfasst, um Bearbeitungsfehler zu erkennen.

Aus der DE 10 2007 024 789 B3 ist es bekannt, einen während eines Schweißprozesses auftretenden Bindefehler durch Kamerabilder des Schmelzbads bzw. des Keyholes oder durch eine thermografische Analyse der abkühlenden Schweißnaht zu erkennen. Es kann auch eine kombinierte Auswertung geometrischer Merkmale aus dem Schmelzbad und thermographischer Daten der erstarrten Schmelze erfolgen, um die Schweißfehlererkennung abzusichern und die Zuverlässigkeit der Prozessüberwachung zu erhöhen.

Aus der US 5,651,903 ist es bekannt, sowohl die UV-Strahlungsintensität des Schweißplasmas als erste Kenngröße für den Schweißprozess als auch die Temperatur des abkühlenden Schmelzbads im Infrarot-Strahlungsbereich als zweite Kenngröße für den Schweißprozess zu messen und die Qualität der Schweißung aufgrund des Vergleichs der Messergebnisse zu bestimmen. Hierzu wird nach dem Schweißprozess für jede der beiden aufgenommenen Messkurven eine Messzelle mit einer maximalen Varianz der Messwerte bestimmt. Für den Fall, dass die beiden Messzellen mit maximaler Varianz demselben Schweißort zugeordnet sind, werden die innerhalb der jeweiligen Messzelle liegenden Messwerte einer Frequenzanalyse unterzogen und mit empirisch bestimmten Mustern verglichen, die auf Anomalien des Schweißprozesses hindeuten. Sofern der Vergleich zumindest einer der Kenngrößen mit den entsprechenden Mustern auf eine Anomalie hindeutet, wird das Werkstück, an dem die Schweißung durchgeführt wurde, als Ausschuss qualifiziert.

### Aufgabe der Erfindung

Demgegenüber stellt sich der vorliegenden Erfindung die Aufgabe, die Fehleranfälligkeit einer Schweißprozessüberwachung weiter zu reduzieren.

### Gegenstand der Erfindung

Diese Aufgabe wird gelöst durch ein Verfahren zum Überwachen der Nahtqualität während eines Laserschweißprozesses, umfassend die Schritte: Ortsaufgelöstes Detektieren von bei dem Schweißprozess vom Werkstück ausgehender Strahlung in einem ersten Wellenlängenbereich und Bestimmen einer ersten geometrischen Kenngröße einer Nahtcharakteristik anhand der im ersten Wellenfängenbereich detektierten Strahlung; ortsaufgelöstes Detektieren von bei dem Schweißprozess vom Werkstück ausgehender Strahlung in einem zweiten, vom ersten verschiedenen Wellenlängenbereich und Bestimmen einer zweiten geometrischen Kenngröße derselben Nahtcharakteristik anhand der im zweiten Wellenlängenbereich detektierten Strahlung; Vergleichen der beiden in den unterschiedlichen Wellenlängenbereichen bestimmten Kenngrößen mit einem jeweiligen Referenzwert oder mit einem jeweiligen Toleranzintervall, sowie Kombinieren der beim Vergleichen erhaltenen Ergebnisse zum Überprüfen der Nahtqualität, wobei das Kombinieren durch logisches Verknüpfen der Ergebnisse erfolgt. Bei der vom Werkstücks ausgehenden Strahlung kann es sich um Strahlung handeln, die beim Schweißprozess erzeugt wird, oder auch um am Werkstück reflektiertes Messlicht.

Erfindungsgemäß wird vorgeschlagen, eine ortsaufgelöste Beobachtung des Schweißprozesses in zwei unterschiedlichen Spektralbereichen durchzuführen und eine kombinierte Auswertung der dabei erhaltenen Messwerte vorzunehmen, um die Erkennung von Nahtunregelmäßigkeiten sicherer zu machen. Eine Kombination der Messungen erfolgt nach dem Vergleich der Kenngrößen mit einem jeweiligen Referenzwert bzw. einem Referenzintervall. Da das Ergebnis eines solchen Vergleichs in der Regel einen binären Wert darstellt, kann ein Kombinieren der beim Vergleich erhaltenen Ergebnisse in Form einer logischen Verknüpfung durchgeführt werden.

Die gleichzeitige Erfassung unterschiedlicher Spektralbereiche ermöglicht hierbei die Bestimmung von zwei verschiedenen geometrischen Kenngrößen, die ggf. nur in jeweils einem der beiden verwendeten Spektralbereiche sichtbar sind und die auf dieselbe Nahtcharakteristik hinweisen. So können beispielsweise beim Schweißen von Baustahl am Stumpfstoß zum Erkennen einer Durchschweißung eine Unterwölbung der Naht als erste geometrische Kenngröße und eine Schmelzbadlänge als zweite geometrische Kenngröße bestimmt werden.

Auch kann eine Nahtcharakteristik wie z.B. die Nahtbreite durch eine direkte Messung - z.B. durch einen Lichtschnitt - im sichtbaren Spektralbereich als erste Kenngröße bestimmt werden. Als zweite Kenngröße für die Nahtbreite kann eine Schmelzbadbreite dienen, welche im infraroten Wellenlängenbereich bestimmt wird und ebenfalls ein Maß für die Nahtbreite darstellt.

Die Nahtcharakteristik kann bevorzugt ausgewählt werden aus der Gruppe umfassend: Durchschweißung, Nahtbreite, Humping sowie Grad der Asymmetrie beim Verschweißen der Werkstücke. Die der jeweiligen Nahtcharakteristik zugeordneten Kenngrößen werden nachfolgend im Einzelnen beschrieben.

Zur Prüfung der Durchschweißung kann beispielsweise das Vorhandensein oder das Fehlen eines Durchschweißlochs sowohl im sichtbaren als auch im infraroten Wellenlängenbereich bestimmt werden. In diesem Fall entsprechen sich beide geometrische Kenngrößen und es wird eine redundante Bestimmung in den beiden unterschiedlichen Wellenlängenbereichen vorgenommen. Falls das Durchschweißloch jedoch in einem Wellenlängenbereich, z.B. im sichtbaren Wellenlängenbereich, nicht detektiert werden kann, ist es möglich, als Kenngröße für die Durchschweißung alternativ die Unterwölbung der Naht bzw. die Schmelzbadlänge zu bestimmen (s.o.).

Wie weiter oben beschrieben wurde, kann als Nahtcharakteristik die Nahtbreite in beiden Wellenlängenbereichen bestimmt werden. Auch das Humping, d.h. eine Schwankung der Wölbung der Naht, kann durch eine Detektion z.B. mittels eines Lichtschnitts im sichtbaren Bereich sowie durch Detektion einer Schwankung der Wärmespurbreite der abkühlenden Naht im infraroten Wellenlängenbereich bestimmt werden.

Eine Asymmetrie beim Verschweißen der als Fügepartner dienenden Werkstücke kann insbesondere auftreten, wenn die Werkstücke beim Schweißen am Fügestoß einen Höhenversatz bzw. einen Dickenunterschied aufweisen, oder wenn die beiden zu verschweißenden Werkstücke aus Werkstoffen mit stark unterschiedlichen Schmelzpunkten, Wärmeleitungseigenschaften und/oder Wärmekapazitäten bestehen. Zur Charakterisierung des Grades der Asymmetrie können als erste Kenngröße der Abstand zwischen Brennfleck und Fügestoß, der beispielsweise im sichtbaren Wellenlängenbereich bestimmt werden kann, sowie als zweite Kenngröße die laterale Position des Schmelzbades und/oder die laterale Position der Wärmespur der abkühlenden Schweißnaht im infraroten Wellenlängenbereich dienen.

In einer vorteilhaften Variante wird zur Erhöhung der Genauigkeit bei der Bestimmung der zweiten geometrischen Kenngröße die erste geometrische Kenngröße berücksichtigt (oder umgekehrt). Insbesondere kann hierbei der Einfluss der ersten geometrischen Kenngröße auf die in dem zweiten Wellenlängenbereich ortsaufgelöst detektierte Strahlung bzw. die ortsaufgelöst gemessene Strahlungsintensität berücksichtigt werden. Beispielsweise kann es sich bei der ersten geometrischen Kenngröße um ein Maß für die Wölbung der Nahtoberraupe handeln, z.B. um einen Abstand zwischen dem tiefsten bzw. höchsten Punkt an der Oberseite der Naht (senkrecht zur Vorlaufrichtung) und der Werkstückoberfläche, der z.B. mit einem Lichtschnitt bestimmt werden kann.

Die Kenntnis über die Form der Nahtoberraupe bzw. deren Welligkeit kann ausgenützt werden, um die Präzision bei der Bestimmung von Kenngrößen zu erhöhen, die von der Wärmespur (im infraroten Spektralbereich) abhängig sind, da die Wölbung der Nahtoberraupe einen Einfluss auf die spektrale Strahldichte hat, welche von der Wärmespur der Naht ausgeht. Die spektrale Strahldichte hängt hierbei sowohl von der Temperatur als auch vom Emissionsgrad ab, wobei letzterer unter anderem vom Winkel der Nahtoberfläche relativ zum Detektorstrahlengang abhängig ist. Der Emissionsgrad hängt daher von der Form bzw. der Wölbung der Nahtoberfläche bzw. der Nahtoberraupe ab. Die Wölbung der Nahtoberraupe als erste Kenngröße kann daher verwendet werden, um den Einfluss des sich ändernden Emissionsgrads durch die gewölbte Oberfläche der Naht auf die detektierte Strahldichte des Wärmebildes zu kompensieren und z.B. die Breite der Wärmespur mit größerer Genauigkeit bestimmen zu können.

Bei einer weiteren Variante wird die Nahtqualität als unzureichend beurteilt, wenn in mindestens einem Wellenlängenbereich die Kenngröße nicht dem Referenzwert entspricht oder außerhalb des Toleranzintervalls liegt. Der Vergleich des Kennwerts mit dem Referenzwert bzw. dem Toloranzintervall führt typischer Weise zu einer binären Entscheidung über die jeweilige Nahtcharakteristik: Durchschweißung vorhanden (ja/nein) bzw. Durchschweißloch detektiert (ja/nein), Nahtbereite in Ordnung (ja/nein), Humping vorhanden (ja/nein), Asymmetrie bei der Schweißung bzw. Schweißpunkt an richtiger Stelle (ja/nein). Diese binären Ergebnisse können zur Beurteilung der jeweiligen Nahtcharakteristik logisch verknüpft werden. So kann beispielsweise die Nahtqualität als "in Ordnung" beurteilt werden, wenn das Ergebnis in beiden Fällen übereinstimmt (und eine gute Nahtqualität anzeigt), z.B. Durchschweißloch vorhanden (ja/ja) bzw. Humping vorhanden (nein/nein).

In einer Variante umfasst das Verfahren als weiteren Schritt: Verbessern der Nahtqualität durch Verändern von Parametern des Laserschweißprozesses. Wird die Nahtqualität als unzureichend beurteilt, so kann versucht werden, die Parameter des Schweißprozesses so zu verändern, dass die Nahtqualität wieder dem Toleranzintervall bzw. dem Referenzwert entspricht. Zu diesem Zweck können Schweißparameter wie z.B. die Schweißgeschwindigkeit, die Intensität der Laserstrahlung, die Position des Laserbearbeitungskopfs, die Einspannkräfte der zu verschweißenden Werkstücke etc. so angepasst werden, dass die Nahtqualität sich verbessert, d.h. es kann anhand der Beurteilung der Nahtqualität eine Regelung vorgesehen werden. Insbesondere kann für den Fall, dass als Nahtcharakteristik die Asymmetrie beim Aufschmelzen der Werkstücke im Bezug auf den Fügestoß bzw. eine Abweichung des Brennflecks von der gewünschten Schweißposition relativ zum Fügespalt bestimmt wird, ein typischer Weise ohnehin vorhandener Regelkreis, der zur Einstellung der lateralen Position des Brennflecks relativ zum Fügestoß dient, für die Korrektur eingesetzt werden.

Bei einer Variante ist der erste Wellenlängenbereich der sichtbare Spektralbereich und der zweite Wellenlängenbereich ist der infrarote Spektralbereich. Unter dem sichtbaren Spektralbereich (VIS) werden Wellenlängen zwischen ca. 380 nm und ca. 800 nm, unter dem infraroten (IR) Spektralbereich werden Wellenlängen über 800 nm bis ca. 1 mm verstanden. In der Regel wird für die vorliegenden Anwendungen der nahe Infrarotbereich (NIR) verwendet, d.h. Wellenlängen, die nicht größer sind als 2 µm.

Zur Messung in den zwei Spektralbereichen können zwei Kameras mit Empfindlichkeiten im sichtbaren (VIS) bzw. im nahen Infrarot-Bereich (NIR) eingesetzt werden. Alternativ kann eine einzelne Kamera mit einem zweigeteilten Bandpassfilter im Strahlengang verwendet werden, der in einem Bereich sichtbare und in einem anderen Bereich NIR-Strahlung transmittiert, welche in unterschiedlichen Bereichen der Detektorfläche der Kamera erfasst wird. Der NIR-Bereich kann zusätzlich in zwei oder mehr Teilbereiche unterteilt sein, beispielsweise um eine Absoluttemperaturmessung mittels Quotientenpyrometrie zu ermöglichen. Im Kamerastrahlengang können Bandpassfilter eingesetzt werden, die jeweils Strahlung bzw. Prozesslicht in dem benötigten Spektralbereich transmittieren und das Prozesslicht außerhalb des benötigten Spektralbereichs unterdrücken.

Bei einer Variante wird die erste Kenngröße ausgewählt aus der Gruppe umfassend: Ausdehnung eines Durchschweißlochs, Abstand zwischen Laserbrennfleck und Fügestoß, Wölbung der Nahtoberraupe und Nahtbreite. Diese Kenngrößen lassen sich insbesondere im sichtbaren Wellenlängenbereich gut messen. Die Lage des Fügestoßes kann z.B. mit Hilfe von Auflicht- und/oder Lichtschnitt-Beleuchtung ermittelt werden, um den Abstand zum Laserbrennfleck zu bestimmen, dessen Position typischer Weise ebenfalls im sichtbaren Bereich zu erkennen ist. Auch die Lage und Form der gebildeten Naht, insbesondere die Wölbung bzw. die Geometrie der Nahtoberraupe, kann mit Hilfe einer Lichtschnitt-Beleuchtung detektiert werden.

In einer weiteren Ausführungsform wird die zweite Kenngröße ausgewählt aus der Gruppe umfassend: Ausdehnung eines Durchschweißlochs, Schmelzbadlänge, Schmelzbadbreite, Breite der Wärmespur, sowie Abstand von Schmelzbad oder Wärmespur relativ zum Fügestoß. Insbesondere das Schmelzbad und die sich an dieses anschließende Wärmespur in der erkaltenden Schmelze des Werkstoff-Materials der Schweißnaht lassen sich im NIR-Wellenlängenbereich gut beobachten. Auch die Position des Laserbrennflecks kann in diesem Wellenlängenbereich detektiert werden.

Bei einer weiteren Variante wird anhand der in dem ersten oder zweiten Wellenlängenbereich detektierten Strahlung mindestens eine weitere geometrische Kenngröße bestimmt und zur Prüfung der Plausibilität der ersten Kenngröße und/oder der zweiten Kenngröße herangezogen. Als zusätzliche Kenngröße kann beispielsweise die Länge des Schmelzbades bestimmt werden. Die zusätzliche Kenngröße kann dazu dienen, eine fehlerbehaftete Messung z.B. bei der Bestimmung der Überhöhung oder der Unterwölbung der Schweißnaht mittels eines Lichtschnitts zu erkennen. Eine solche fehlerbehaftete Messung kann auftreten, wenn die Länge des Schmelzbades so groß wird, dass diese sich in den Oberflächenbereich hinein erstreckt, in dem die Überhöhung bzw. die Unterwölbung der Schweißnaht mit dem Lichtschnitt bestimmt werden soll.

Zusammenfassend ermöglicht eine Kombination der Auswertung von Messwerten bzw. Kenngrößen aus beiden Spektralbereichen eine robustere Erkennung von Schweißnahtunregelmäßigkeiten. Die kombinierte Auswertung der Messergebnisse kann in einem so genannten Framegrabber einer als Detektor verwendeten Kamera, in einem Bildverarbeitungs-Computer z.B. einer den Schweißprozess steuernden Laserbearbeitungsmaschine oder wahlweise in einer externen Steuerung erfolgen. Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden.

Es zeigen:
- Fig. 1: eine schematische Darstellung eines Laserbearbeitungskopfs mit zwei Kameras zur Detektion von Strahlung in zwei unterschiedlichen Wellenlängenbereichen,
- Fig. 2: eine schematische Darstellung einer Draufsicht auf unterschiedliche Messbereiche bei der Durchführung eines Laserschweißprozesses zur Bestimmung von Kenngrößen für mindestens eine Nahtcharakteristik, sowie
- Fig. 3: eine schematische Darstellung eines Werkstücks mit drei unterschiedlich gewölbten Nahtoberraupen.

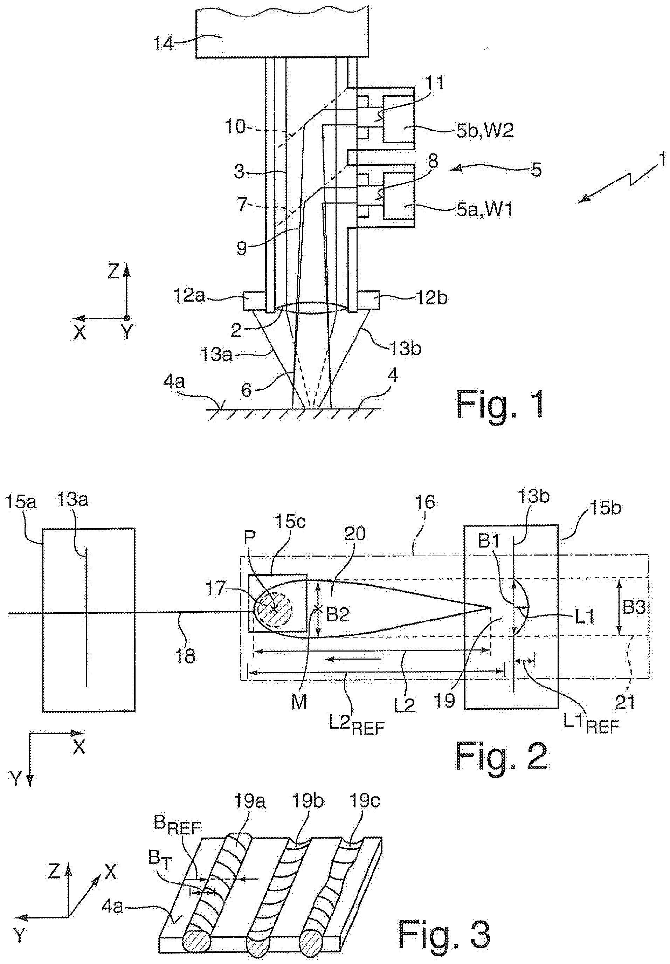

**Fig. 1** zeigt einen Laserbearbeitungskopf **1** mit einer Fokussierlinse **2,** welche einen dem Laserbearbeitungskopf 1 zugeführten Laserstrahl **3** auf eine (in Fig. 1 nicht gezeigte) Fokusfläche auf einer Werkstückoberfläche **4a** im Bereich einer Fügestelle zwischen zwei Werkstücken 4 fokussiert, um dort eine Laserschweißung durchzuführen. Zur Überwachung des Schweißprozesses ist an dem Laserbearbeitungskopf 1 eine Sensoreinrichtung **5** mit einer CMOS-Kamera **5a** sowie mit einer InGaAs-Kamera **5b** vorgesehen.

Der Strahlengang **6** der CMOS-Kamera 5a wird an einem teildurchlässigen Umlenkspiegel **7** gefaltet. Auf eine Detektorfläche **8** der CMOS-Kamera 5a wird hierbei nicht nur die Fokusfläche des Laserstrahls 3, sondern ein größerer Ausschnitt des Werkstücks 4 in der Umgebung des Laserstrahls 3 abgebildet. Analog zum Strahlengang 6 der CMOS-Kamera 5a wird auch ein Strahlengang **9** der InGaAs-Kamera 5b an einem Umlenkspiegel **10** gefaltet und trifft auf eine entsprechende Detektorfläche **11.** An dem Laserbearbeitungskopf 1 sind zusätzlich zwei der Sensoreinheit **5** zugeordnete Linienprojektoren **12a, 12b** vorgesehen, welche zwei Laserlichtlinien **13a, 13b** in den von der CMOS-Kamera 5a sowie von der InGaAs-Kamera 5b überwachten Strahlengang 6, 9 projizieren. Die Laserlichtlinien 13a, 13b werden nachfolgend auch als Lichtschnitte 13a, 13b bezeichnet.

In Abhängigkeit von den durch die Kameras 5a, 5b erfassten Messdaten kann der Laserbearbeitungskopf 1 entlang einer als Linearachse ausgebildeten ersten Stellachse (Y-Achse eines XYZ-Koordinatensystems mit X-Richtung als Vorschubrichtung) verschoben werden, um den Laserstrahl 3 an seine optimale (laterale) Schweißposition zu verbringen. Über eine zweite Stellachse (Z-Achse) kann zusätzlich der Abstand zwischen dem Laserbearbeitungskopf 1 und der Werkstückoberfläche 4a variiert werden. Zu diesem Zweck ist eine (Strahl-)Führungseinrichtung **14** des Laserbearbeitungskopfs 1 mittels (nicht gezeigter) Linearantriebe in die jeweiligen Achsrichtungen verschiebbar.

Die CMOS-Kamera 5a dient der Erfassung von Strahlung in einem ersten Wellenlängenbereich W1, und zwar dem sichtbaren (VIS-)Bereich, d.h. zur Erfassung von Wellenlängen zwischen ca. 380 nm und ca. 800 nm. Die InGaAs-Kamera 5b dient hingegen der Erfassung von Strahlung in einem zweiten Wellenlängenbereich W2, und zwar dem NIR-Bereich zwischen ca. 800 nm und ca. 2 µm. Der zweite Wellenlängenbereich W2 (NIR-Bereich) kann zusätzlich in zwei oder mehr Teilbereiche unterteilt werden, z.B. um eine Absoluttemperaturmessung mittels Quotientenpyrometrie zu ermöglichen. Im jeweiligen Strahlengang 6, 9 der Kameras 5a, 5b werden (nicht gezeigte) Bandpassfilter eingesetzt, die jeweils Prozesslicht in dem benötigten Spektralbereich transmittieren und Prozesslicht außerhalb des benötigten Spektralbereichs W1, W2 möglichst gut unterdrücken.

Es versteht sich, dass die Anordnung der Kameras 5a, 5b relativ zum Strahlengang des Laserstrahls 3 auch anders als in Fig. 1 dargestellt ausgeführt werden kann. Beispielsweise kann nur ein einziger Umlenkspiegel im Strahlengang des Laserstrahls 3 angeordnet werden und die Zuordnung der jeweiligen Strahlengänge 6, 9 zu den Kameras 5a, 5b kann über einen Strahlteiler erfolgen. Alternativ kann eine einzelne Kamera beispielsweise mit einem zweigeteilten Bandpassfilter im Strahlengang eingesetzt werden, der in einem ersten Bereich Strahlung im sichtbaren Wellenlängenbereich W1 und in einem zweiten Bereich Strahlung im NIR-Wellenlängenbereich W2 transmittiert, welche an unterschiedlichen Orten auf die Detektorfläche der Kamera treffen. Weiterhin ist eine nicht-koaxiale Beobachtung möglich, bei der Strahlengang 6, 9 der Kamera(s) 5a, 5b nicht mit dem Strahlengang des Laserstrahls 3 übereinstimmt.

An der Detektorfläche 8 der CMOS-Kamera 5a sind, wie in **Fig. 2** gezeigt, drei Messbereiche **15a** bis **15c** entlang einer durch einen Pfeil angedeuteten Schweißrichtung (X-Richtung) angeordnet. Der erste Messbereich 15a (Pre-Messfenster) erfasst während des Schweißprozesses einen Ausschnitt des Werkstücks bzw. der zu verschweißenden Werkstücke 4 vorlaufend zu einem Brennfleck **17,** welcher durch den Laserstrahl 3 erzeugt wird. In dem ersten Messbereich 15a wird die Position bzw. die Form eines Fügestoßes **18** zwischen den zu fügenden Werkstücken 4 erfasst, wozu die in Fig. **1** gezeigte erste Laserlichtlinie 13a (Lichtschnitt) dient. Alternativ kann der Fügestoß auch flächig durch entsprechende Beleuchtungsmodule 13a ausgeleuchtet und im Auflicht erfasst werden.

Analog wird in dem zweiten Messbereich 15b (Post-Messfenster) Strahlung nachlaufend zur Schweißung detektiert, wobei die zweite Laserlichtlinie 13b dazu dient, Informationen über die Geometrie der Schweißnaht **19,** insbesondere über deren Über- bzw. Unterwölbung zu erhalten. Der dritte Messbereich 15c (In-Messfenster) dient der Beobachtung des unmittelbaren Bereichs der Schweißung mit dem Brennfleck 17, welcher der Auftrefffläche des Laserstrahls 3 auf der Werkstückoberfläche 4a entspricht.

An der Sensorfläche 11 der InGaAs-Kamera 5b wird ein Messbereich 16 ausgewertet, welcher die Wärmestrahlung im Bereich des Brennflecks 17, des sich anschließenden Schmelzbades **20** sowie der (schematisch dargestellten) Wärmespur **21** der erkaltenden Schmelze erfasst, die sich an das Schmelzbad 20 anschließt. Die jeweiligen Messbereiche 15a-d, 16 entsprechen den Bereichen, in denen die Intensität des auf die jeweilige Sensorfläche 8, 11 eingestrahlten Lichts mittels einer Auswerteeinrichtung (nicht gezeigt) ausgewertet wird. Die kombinierte Auswertung der Messergebnisse kann in einem so genannten Framegrabber einer als Detektor verwendeten Kamera 5a, 5b, in einem Bildverarbeitungs-Computer z.B. einer den Schweißprozess steuernden Laserbearbeitungsmaschine oder wahlweise in einer externen Steuerung erfolgen. Es versteht sich, dass neben den gezeigten rechteckigen Formen für die Messbereiche 15a-c, 16 gegebenenfalls auch andere Formen bzw. Geometrien gewählt werden können. Insbesondere kann auch die Zahl der Messbereiche variieren.

Mittels der Kameras 5a, 5b kann in dem ersten bzw. zweiten Wellenlängenbereich W1, W2 eine erste bzw. zweite geometrische Kenngröße bestimmt werden, welche dieselbe Nahtcharakteristik beschreibt. Als geometrische Kenngröße kann beispielsweise die räumliche Ausdehnung bzw. die Geometrie eines Durchschweißlochs dienen, welches bei dem in Fig. 2 gezeigten Beispiel innerhalb des Bereichs des Brennflecks 17 liegt. Bei der Verwendung eines Festkörperlasers zur Erzeugung des Laserstrahls 3 ist das Durchschweißloch in beiden Wellenlängenbereichen W1, W2, d.h. sowohl im VIS-Spektralbereich als auch im IR-Spektralbereich sichtbar. Die erste und zweite Kenngröße beschreiben in diesem Fall ein- und dieselbe geometrische Größe, nämlich die Ausdehnung und insbesondere die Größe des Durchschweißlochs. Durch eine gleichzeitige Erkennung des Durchschweißlochs in beiden Spektralbereichen W1, W2 kann eine Plausibilitätsprüfung und eine Steigerung der Erkennungsrate erfolgen.

Das Durchschweißloch wird als räumlich begrenzte verringerte Beleuchtungsstärke auf den Kameras 5a, 5b innerhalb des jeweiligen Messbereichs15c, 16 im Umfeld des Brennflecks 17 erfasst. Für die Detektion werden zusätzliche einschränkende Kriterien, wie z.B. eine minimale Größe des detektierten Lochs, Kontrast oder Lage des detektierten Lochs als Referenzgrößen berücksichtigt. Es wird ausgenutzt, dass der Vergleich der räumlich begrenzten verringerten Beleuchtungsstärke, welcher im Wesentlichen der Ausdehnung des Durchschweißlochs entspricht, mit der jeweiligen Referenzgröße entweder zur Detektion oder zu keiner Detektion des Durchschweißlochs führt und somit ein binäres Ergebnis liefert (Durchschweißloch vorhanden: ja/nein), so dass eine logische Verknüpfung der beiden Ergebnisse des Vergleichs in beiden Spektralbereichen W1, W2 erfolgen kann, um die Nahtqualität zu beurteilten. Der Schweißprozess bzw. die Nahtqualität kann insbesondere nur dann als ausreichend bzw. als "in Ordnung" beurteilt werden, wenn das Durchschweißloch in beiden Spektralbereichen W1, W2 detektiert wurde, d.h. wenn in beiden Spektralbereichen W1, W2 als Ergebnis des Vergleichs "Durchschweißloch vorhanden: ja" erhalten wurde.

Beim Schweißen mit einem CO₂-Laser ist das Durchschweißloch in der Regel nur im infraroten Spektralbereich W2 sichtbar, da dieses im sichtbaren Spektralbereich W1 durch das im Keyhole vorhandene Plasma überstrahlt wird. Im infraroten Spektralbereich W2 wird weiterhin als Kenngröße für die Durchschweißung das Durchschweißloch direkt detektiert. Beim Schweißen von Baustahl am Stumpfstoß kann außerdem im sichtbaren Spektralbereich W1 mit Hilfe des zweiten Lichtschnitts 13b eine Unterwölbung der gebildeten Schweißnaht 19 als Kenngröße bestimmt werden. Hierbei dient als Maß für die Unter- bzw. Überwölbung ein Abstand L1 zwischen Werkstückoberfläche 4a und dem tiefsten bzw. höchsten Punkt der Naht, wobei beide Größen bzw. der Abstand L1 mittels des zweiten Lichtschnitts 13b auf einfache Weise bestimmt werden können, wie in Fig. 2 zu erkennen ist. Der so gemessene Abstand L1 wird mit einem beispielsweise in Testschweißungen ermittelten Referenzabstand L1_{REF} verglichen. Als weitere Kenngröße dient die Schmelzbadlänge L2, welche im IR-Spektralbereich W2 detektiert wird. Ist die Schmelzbadlänge L2 geringer als ein vorgegebener, z.B. durch Testschweißungen bestimmter Referenzwert L2_{REF}, deutet dies auf eine Durchschweißung hin. Wenn also erstens der Abstand L1 dem Referenzabstand L1_{REF} entspricht, zweitens die Länge L2 geringer ist als der Referenzwert L2_{REF} und drittens das Vorhandensein des Durchschweißlochs detektiert wird, wird die Nahtcharakteristik "Durchschweißung" als "in Ordnung" bewertet.

Bei der Vermessung der Breite der gebildeten Naht 19 kann ebenfalls eine Plausibilitätsprüfung durch Messung in beiden Spektralbereichen W1, W2 erfolgten: Die Nahtbreite (Kenngröße K1) wird einerseits im sichtbaren Spektralbereich mit Hilfe des zweiten Lichtschnitts 13b bestimmt, wobei sich als erste Kenngröße die Breite B1 der Naht 19 ergibt. Das Ergebnis eines Vergleichs der so bestimmten Breite B1 mit einer Referenzgröße B_{REF} (vgl. Fig. 3) wird durch Messung der Schmelzbadbreite B2 (vgl. Fig. 2) als zweite Kenngröße überprüft. Die Breite B2 des Schmelzbads 20 im IR-Spektralbereich entspricht typischer Weise der Nahtbreite B1 und wird ebenfalls mit der Referenzgröße B_{REF} verglichen, welche einer gewünschten (idealen) Schweißnahtbreite entspricht.

Es versteht sich, dass die Messung der Nahtbreite B1 durch den zweiten Lichtschnitt 13b sowie die Messung der Schmelzbadbreite B2 im infraroten Wellenlängenbereich an unterschiedlichen Orten in Schweißrichtung (X-Richtung) erfolgen können (vgl. Fig. 2), wobei unter Berücksichtigung der Schweißgeschwindigkeit bzw. des Zeitversatzes die jeweils bestimmte Breite B1, B2 derselben Position entlang der Schweißnaht 19 zugeordnet werden kann, um den Vergleich zwischen den Kenngrößen B1, B2 am selben Ort vorzunehmen.

Es versteht sich, dass typischer Weise die Breite der Schweißnaht 19 nicht exakt mit der Referenzbreite B_{REF} übereinstimmt, sondern das Abweichungen von der Referenzbereite B_{REF}, welche innerhalb eines ebenfalls in Fig. 3 dargestellten Toleranz-Intervalls B_{REF} +/- B_{T} liegen, als tolerierbar für die Nahtqualität angesehen werden kann und dass demzufolge die Nahtqualität als ausreichend angesehen werden kann wenn gilt: B_{REF} - B_{T} < B1 < B_{REF} + B_{T} bzw. B_{REF} - B_{T} < B2 < B_{REF} + B_{T}.

Als weitere Nahtcharakteristik kann das so genannte "Humping der Naht 19 detektiert werden, d.h. ein Nahtfehler, der eine Schwankung der Nahtüberhöhung bzw. der Nahtunterwölbung beschreibt. Dieser Nahtfehler lässt sich anhand von Fig. 3 erklären, bei der eine erste Nahtoberraupe 19a eine Nahtüberhöhung aufweist, eine zweite Nahtoberraupe 19b eine Nahtunterwölbung zeigt und eine dritte Nahtoberraupe 19c einen Übergang zwischen einer Nahtüberhöhung und einer Nahtunterwölbung aufweist. Eine regelmäßig wiederkehrende Schwankung der Wölbung der Naht (so genanntes "Humping") kann detektiert werden, indem im sichtbaren Wellenlängenbereich W1 der Abstand L1 zwischen der Werkstückoberfläche 4a und dem tiefsten bzw. dem höchsten Punkt der Naht mittels des zweiten Lichtschnitts 13b bestimmt wird. Genauer gesagt dient als erste Kenngröße eine Schwankung (z.B. in Form einer Varianz oder einer Differenz zwischen Minimum und Maximum) der Länge L1 über einen vorgegebenen Zeitraum. Als zweite Kenngröße dient eine Schwankung der Breite B3 der schematisch skizzierten Wärmespur 21 im IR-Wellenlängenbereich W2 über denselben Zeitraum, da die Breite der Wärmespur von der Nahtüberwölbung bzw. Unterwölbung abhängig ist, da an Nahtüberwölbungen mehr aufgeschmolzenes Material vorhanden ist, so dass sich die detektierte Wärmespur verbreitert. Sofern ein Vergleich der beiden Kenngrößen mit einem jeweiligen Referenzwert für die Schwankung ergibt, dass die Schwankung innerhalb eines Toleranzbereichs liegt, kann auf das Nicht-Vorliegen von "Humping" und somit auf eine akzeptable Nahtqualität geschlossen werden.

Eine weitere Nahtcharakteristik stellt eine Asymmetrie beim Aufschmelzen der zu fügenden Werkstücke 4 dar. Eine solche Asymmetrie kann bei einem Höhenversatz oder Dickenunterschied der zu schweißenden Werkstücke 4 am Fügestoß 18 oder bei Werkstücken aus unterschiedlichen Werkstoffen, die unterschiedliche Schmelzpunkte, unterschiedliche Wärmeleitungseigenschaften oder unterschiedliche Wärmekapazität aufweisen (z.B. Stahl und Gusseisen) auftreten. Für die Asymmetrie der Schweißung kann als erste Kenngröße im sichtbaren Spektralbereich W1 der Abstand zwischen der lateralen Position des Brennflecks P und dem Fügestoß 18 gemessen werden. Parallel kann im IR-Wellenlängenbereich der Abstand zwischen der lateralen Position des Schmelzbades 20 und/oder der Wärmespur 21 und dem Fügestoß 18 bzw. der Position P des Brennflecks 17 gemessen werden.

Die Nahtqualität wird als "in Ordnung" angesehen, wenn einerseits die Position P des Brennflecks relativ zum Fügestoß 18 als erste Kenngröße und andererseits der Schwerpunkt des Schmelzbads 20 bzw. die Mitte M des Schmelzbads 20 an seiner breitesten Stelle bzw. der (Flächen-)Schwerpunkt der Wärmespur 21 in einer Richtung quer zum Fügestoß 18 als zweite Kenngröße einen zuvor z.B. durch Testschweißungen festgelegten Referenzabstand aufweist bzw. der Abstand kleiner als dieser festgelegte Referenzabstand ist (wobei der Abstand in Fig. 2 = 0 ist).

Sofern sich beim Vergleich mindestens einer der beiden Kenngrößen mit diesem Referenzabstand eine zu starke Abweichung ergibt, kann ein Regelkreis der Nahtlageregelung genutzt werden, um die Asymmetrie beim Aufschmelzen der Fügepartner zu kompensieren und die Genauigkeit der Nahtlageregelung zu erhöhen, und zwar indem die Position des Laserbearbeitungskopfes 1 quer zum Fügespalt 18 (im vorliegenden Beispiel in Y-Richtung) korrigiert wird. Dies ist insbesondere günstig, wenn beim Fügen einer Werkstoffpaarung ein definiertes Mischungsverhältnis der Werkstoffe in der Schweißnaht 19 eingestellt werden soll. Es versteht sich, dass auch bei der Erkennung einer unzureichenden Nahtqualität anhand der weiter oben beschriebenen Nahtcharakteristika eine entsprechende Regelung von Parametern des Laserschweißprozesses erfolgen kann, wobei als Schweißparameter beispielsweise die Laserintensität, die Schweißgeschwindigkeit, etc. verändert werden können.

Bei ebenen Schweißnahtoberraupen, d.h. bei fehlender Nahtwölbung, kann die Messung der Schweißnahtraupenbreite B1 und der lateralen Schweißnahtraupenposition mit dem zweiten Lichtschnitt 13b im sichtbaren Spektralbereich W1 problematisch sein, da Lichtschnittmessungen eine Konturänderung senkrecht zur Werkstückoberfläche benötigen. Eine lokale Überhöhung oder Unterwölbung der Schweißnahtoberraupe 19a-c kann hingegen mit dem Lichtschnitt als erste Kenngröße gemessen werden. Im zweiten, infraroten Wellenlängenbereich W2 kann die Schmelzbadbreite B2 als zweite Kenngröße bestimmt werden, welche effektiv der Schweißraupenbreite entspricht, nicht jedoch der Überhöhung/Unterwölbung der Schweißnahtoberraupe 19a-c (vgl. Fig. 3). Durch die kombinierte Messung in beiden Wellenlängenbereichen W1, W2 können sowohl die Schweißraupenbreite als auch lokalte Nahtüberhöhungen oder -unterwölbungen bei ebenen Schweißnähten gemessen werden. Die Nahtqualität und damit der Schweißprozess werden als "in Ordnung" beurteilt, wenn beide Kenngrößen L1, B2 durch Testschweißungen festgelegte Werte aufweisen oder innerhalb von jeweils vorher festgelegten Toleranzbereichen liegen.

Für die Auswertung der oben beschriebenen Messung kann als weitere Kenngröße die Schmelzbadlänge L2 herangezogen werden. Genauer gesagt wird geprüft, ob die Schmelzbadlänge L2 eine vorgegebene Referenzlänge überschreitet, welche nicht zwingend mit der Referenzlänge L2_{REF} für die Beurteilung der Durchschweißung übereinstimmen muss. Ist dies der Fall, kann das Schmelzbad 20 mit seinem hinteren Ende in den Bereich des Lichtschnittes 13b hineinragen, so dass die Messung der Nahtüberhöhung oder -unterwölbung im ersten Wellenlängenbereich W1 in der Regel nicht korrekt ist. Falls der Vergleich mit der Referenzlänge ergibt, dass das Schmelzbad 20 zu lang ist, wird die entsprechende Messung der Länge L1 anhand des zweiten Lichtschnitts 13b im ersten Wellenlängenbereich W1 für die Bestimmung der Überwölbung bzw. Unterwölbung der Naht nicht herangezogen. Die Schmelzbadlänge L2 dient somit der Prüfung der Plausibilität der Bestimmung der Länge L1 als Maß für die Unter- bzw. die Überwölbung der Nahtoberraupe 19a-c.

Es hat sich als günstig erwiesen, zur Erhöhung der Präzision bei der Bestimmung einer der beiden Kenngrößen die andere Kenngröße zu berücksichtigen. Beispielsweise wird die spektrale Strahlungsdichte, welche von der Wärmespur 21 des Schweißprozesses im IR-Wellenlängenbereich W2 ausgeht, durch die (absolute) Temperatur und den Emissionsgrad an der Oberfläche der Nahtoberraupe 19a-c beeinflusst. Der Emissionsgrad hängt jedoch vom Winkel ab, unter dem die zu detektierende Strahlung 9 von der Nahtoberraupe 19a-c abgestrahlt wird, d.h. der Emissionsgrad wird durch die Form der Nahtoberraupe beeinflusst.

Wie weiter oben dargestellt wurde, kann die Form der Nahtoberraupe 19a-c mit Hilfe einer Lichtschnittmessung im sichtbaren Spektralbereich W1 bestimmt werden. Als Maß für die Unter- bzw. Überwölbung der Nahtoberraupe 19a bis 19c kann hierbei insbesondere wie oben beschrieben die Länge L1 zwischen der Werkstückoberfläche 4a und dem tiefsten bzw. höchsten Punkt der Nahtoberraupe 19a bis 19c dienen. Die auf diese Weise bestimmte Kenngröße kann bei der Auswertung der Wärmespur 21 der Naht 19 im zweiten Spektralbereich W2 herangezogen werden, um den Einfluss des sich ändernden Emissionsgrads der gewölbten Oberfläche der Naht 19 auf die detektierte Strahldichte rechnerisch zu kompensieren. Auf diese Weise kann die Genauigkeit bei der Bestimmung der zweiten Kenngröße in Form der Nahtbreite B3 im IR-Wellenlängenbereich durch die Bestimmung der Unter- bzw. Überwölbung der Nahtoberraupe 19a-c verbessert werden.

Wie weiter oben dargestellt wurde, kann durch die Bestimmung von zwei Kenngrößen für dieselbe Nahtcharakteristik die Beurteilung der Nahtqualität zusätzlich abgesichert werden, so dass die Zuverlässigkeit der Prozessüberwachung erhöht wird. Es versteht sich, dass gegebenenfalls auch mehr als zwei Kenngrößen zur Beurteilung derselben Nahtcharakteristik herangezogen werden können, wobei die Nahtcharakteristik als "in Ordnung" angesehen wird, wenn die mehr als zwei Kenngrößen innerhalb des jeweiligen Toleranzbereichs liegen bzw. mit dem Referenzwert übereinstimmen. Es versteht sich, dass auch parallel mehrere Nahtcharakteristiken überwacht bzw. überprüft werden können. Nur wenn jede einzelne Nahtcharakteristik als "in Ordnung" bewertet wird, wird auch der Schweißprozess insgesamt als "in Ordnung" bewertet.

## Patentansprüche

1. Verfahren zum Überprüfen der Nahtqualität während eines Laserschweißprozesses, umfassend die Schritte:
Ortsaufgelöstes Detektieren von bei dem Schweißprozess vom Werkstück ausgehender Strahlung (6) in einem ersten Wellenlängenbereich (W1) und Bestimmen einer ersten geometrischen Kenngröße (B1, L1, P) einer Nahtcharakteristik anhand der im ersten Wellenlängenbereich (W1) detektierten Strahlung (6),
Ortsaufgelöstes Detektieren von bei dem Schweißprozess vom Werkstück ausgehender Strahlung (9) in einem zweiten, vom ersten verschiedenen Wellenlängenbereich (W2) und Bestimmen einer zweiten geometrischen Kenngröße (B2, B3, L2) derselben Nahtcharakteristik anhand der im zweiten Wellenlängenbereich (W2) detektierten Strahlung (9),
Vergleichen der beiden in den unterschiedlichen Wellenlängenbereichen (W1, W2) bestimmten Kenngrößen (B1, L1, P; B2, B3, L2) mit einer jeweiligen Referenzgröße (B_{REF}, L1_{REF}, L2_{REF}) oder mit einem jeweiligen Toleranzintervall (B_{REF} - B_{T}, B_{REF} + B_{T}), sowie
Logisches Verknüpfen der beim Vergleichen erhaltenen Ergebnisse zum Überprüfen der Nahtqualität.

2. Verfahren nach Anspruch 1, bei dem die Nahtcharakteristik ausgewählt wird aus der Gruppe umfassend: Durchschweißung, Nahtbreite. Humping, sowie Grad der Asymmetrie beim Verschweißen.

3. Verfahren nach Anspruch 1 oder 2, bei dem zur Erhöhung der Genauigkeit bei der Bestimmung der zweiten geometrischen Kenngröße (B2) die erste geometrische Kenngröße (L1) berücksichtigt wird.

4. Verfahren nach Anspruch 3, bei dem die erste geometrische Kenngröße (L1) ein Maß für die Wölbung einer Nahtoberraupe (19a-19c) ist.

5. Verfahren nach einem der vorhergehenden Ansprüche, bei dem die Nahtqualität als unzureichend beurteilt wird, wenn in mindestens einem Wellenlängenbereich (W1, W2) die Kenngröße (B1, L1; B2; L2) nicht der Referenzgröße (B_{REF}, L1_{REF}, L2_{REF}) entspricht oder außerhalb des Toleranzintervalls (B_{REF} - B_{T}, B_{REF} + B_{T}) liegt.

6. Verfahren nach Anspruch 5, weiter umfassend:
Verbessern der Nahtqualität durch Verändern von Schweißparametern des Laserschweißprozesses.

7. Verfahren nach einem der vorhergehenden Ansprüche, bei dem der erste Wellenlängenbereich (W1) der sichtbare Spektralbereich und der zweite Wellenlängenbereich (W2) der infrarote Spektralbereich ist.

8. Verfahren nach einem der vorhergehenden Ansprüche, bei dem die erste Kenngröße ausgewählt wird aus der Gruppe umfassend: Ausdehnung eines Durchschweißlochs, Abstand zwischen einer Position (P) eines Laserbrennflecks (17) und einem Fügestoß (18), Wölbung einer Nahtoberraupe (19a-c) und Nahtbreite (B1).

9. Verfahren nach einem der vorhergehenden Ansprüche, bei dem die zweite Kenngröße ausgewählt wird aus der Gruppe umfassend: Ausdehnung eines Durchschweißlochs, Schmelzbadlänge (L2), Schmelzbadbreite (B2), Breite (B3) einer Wärmespur (21), sowie Abstand zwischen Schmelzbad (20) oder Wärmespur (21) und Fügestoß (18).

10. Verfahren nach einem der vorhergehenden Ansprüche, bei dem anhand der in dem ersten oder zweiten Wellenlängenbereich (W1, W2) delektierten Strahlung (6, 9) mindestens eine weitere geometrische Kenngröße (L2) bestimmt wird und zur Prüfung der Plausibilität der ersten Kenngröße (L1) und/oder der zweiten Kenngröße herangezogen wird.

11. Verfahren nach Anspruch 10, bei dem die weitere geometrische Kenngröße (L2) die Länge (L2) eines Schmelzbads (20) ist.

## Claims

1. A method of verifying the seam quality during a laser welding process, comprising the steps:
spatially resolved detecting of radiation (6) in a first wavelength range (W1) emerging from the workpiece during the welding process and determining of a first geometric parameter (B1, L1, P) of a seam characteristic on the basis of the radiation (6) detected in the first wavelength range (W1);
spatially resolved detecting of radiation (9) in a second wavelength range (W2) different from the first emerging from the workpiece during the welding process and determining of a second geometric parameter (B2, B3, L2) of the same seam characteristic on the basis of the radiation (9) detected in the second wavelength range (W2);
comparing of the two parameters (B1, L1, P; B2, B3, L2) determined in the different wavelength ranges (W1, W2) with a respective reference value (B_{REF}, L1_{REF}, L2_{REF}) or with a respective tolerance interval (B_{REF} - B_{T}, B_{REF} + B_{T}), and
logical combining of the results obtained during comparison to verify the seam quality.

2. A method according to claim 1, in which the seam characteristic is selected from the group comprising: root penetration, seam width, humping, and degree of asymmetry during welding.

3. A method according to claim 1 or claim 2, in which, to increase accuracy, the first geometric parameter (L1) is taken into account when determining the second geometric parameter (B2).

4. A method according to claim 3, in which the first geometric parameter (L1) is a measure of the curvature of a weld bead (19a-19c).

5. A method according to any one of the preceding claims, in which the seam quality is assessed as unsatisfactory if in at least one wavelength range (W1, W2) the parameter (B1, L1; B2; L2) does not correspond to the reference value (B_{REF}, L1_{REF}, L2_{REF}) or lies outside the tolerance interval (B_{REF}- B_{T}, B_{REF}+ B_{T}).

6. A method according to claim 5, further comprising:
improving the seam quality by modifying welding parameters of the laser welding process.

7. A method according to any one of the preceding claims, in which the first wavelength range (W1) is the visible spectral range and the second wavelength range (W2) is the infrared spectral range.

8. A method according to any one of the preceding claims, in which the first parameter is selected from the group comprising: extent of a full penetration hole, distance between a position (P) of a laser focal spot (17) and a joint (18), curvature of a weld bead (19a-c) and seam width (B1).

9. A method according to any one of the preceding claims, in which the second parameter is selected from the group comprising: extent of a full penetration hole, weld pool length (L2), weld pool width (B2), width (B3) of a heat trail (21), and distance between weld pool (20) or heat trail (21) and joint (18).

10. A method according to any one of the preceding claims, in which at least one further geometric parameter (L2) is determined by means of radiation (6, 9) detected in the first or second wavelength range (W1, W2) and is used to verify the plausibility of the first parameter (L1) and/or the second parameter.

11. A method according to claim 10, in which the further geometric parameter (L2) is the length (L2) of a weld pool (20).

## Revendications

1. Procédé de vérification de la qualité de la soudure pendant un processus de soudage au laser, comprenant les étapes suivantes :
détection à résolution spatiale d'un rayonnement (6) provenant de la pièce lors du processus de soudage dans une première plage de longueurs d'onde (W1) et détermination d'une première grandeur caractéristique géométrique (B1, L1, P) d'une caractéristique de la soudure à partir du rayonnement (6) détecté dans la première plage de longueurs d'onde (W1),
détection à résolution spatiale d'un rayonnement (9) provenant de la pièce lors du processus de soudage dans une deuxième plage de longueurs d'onde (W2), différente de la première, et détermination d'une deuxième grandeur caractéristique géométrique (B2, B3, L2) de la même caractéristique de la soudure à partir du rayonnement (9) détecté dans la deuxième plage de longueurs d'onde (W2),
comparaison des deux grandeurs caractéristiques (B1, L1, P ; B2, B3, L2) déterminées dans les plages de longueurs d'onde différentes (W1, W2) avec une grandeur de référence (B_{REF}, L1_{REF}, L2_{REF}) respective ou avec un intervalle de tolérance (B_{REF} - B_{T}, B_{REF} + B_{T}) respectif, et
combinaison logique des résultats obtenus lors de la comparaison pour vérifier la qualité de la soudure.

2. Procédé selon la revendication 1, selon lequel la caractéristique de la soudure est sélectionnée dans le groupe comprenant : pénétration de la soudure, largeur de la soudure, humping ainsi que degré de l'asymétrie lors du soudage.

3. Procédé selon la revendication 1 ou 2, selon lequel, pour augmenter la précision, il est tenu compte de la première grandeur caractéristique géométrique (L1) lors de la détermination de la deuxième grandeur caractéristique géométrique (B2).

4. Procédé selon la revendication 3, selon lequel la première grandeur caractéristique géométrique (L1) est une mesure du bombement d'un cordon supérieur de soudure (19a-19c).

5. Procédé selon l'une des revendications précédentes, selon lequel la qualité de la soudure est jugé insuffisante si, dans au moins une plage de longueurs d'onde (W1, W2), la grandeur caractéristique (B1, L1 ; B2 ; L2) ne correspond pas à la grandeur de référence (B_{REF}, L1_{REF}, L2_{REF}) ou se situe en dehors de l'intervalle de tolérance (B_{REF} - B_{T}, B_{REF} + B_{T}).

6. Procédé selon la revendication 5, comprenant en outre l'étape suivante :
amélioration de la qualité de la soudure par modification de paramètres de soudage du processus de soudage au laser.

7. Procédé selon l'une des revendications précédentes, selon lequel la première plage de longueurs d'onde (W1) est la plage spectrale visible et la deuxième plage de longueurs d'onde (W2) la plage spectrale infrarouge.

8. Procédé selon l'une des revendications précédentes, selon lequel la première grandeur caractéristique est sélectionnée dans le groupe comprenant : extension d'un trou débouchant, distance entre une position (P) d'une tache focale laser (17) et un joint d'assemblage (18), bombement d'un cordon supérieur de soudure (19a-c) et largeur de la soudure (B1).

9. Procédé selon l'une des revendications précédentes, selon lequel la deuxième grandeur caractéristique est sélectionnée dans le groupe comprenant : extension d'un trou débouchant, longueur du bain de fusion (L2), largeur du bain de fusion (B2), largeur (B3) d'une traînée thermique (21) ainsi que distance entre bain de fusion (20) ou traînée thermique (21) et joint d'assemblage (18).

10. Procédé selon l'une des revendications précédentes, selon lequel au moins une autre grandeur caractéristique géométrique (L2) est déterminée à partir du rayonnement (6, 9) détecté dans la première ou la deuxième plage de longueurs d'onde (W1, W2) et utilisée pour contrôler la plausibilité de la première grandeur caractéristique (L1) et/ou de la deuxième grandeur caractéristique.

11. Procédé selon la revendication 10, selon lequel l'autre grandeur caractéristique géométrique (L2) est la longueur (L2) d'un bain de fusion (20).
